# EUROPEAN PATENT APPLICATION

(11) **EP 2 674 876 A1**
(43) Date of publication of application: **18.12.2013**
(21) Application number: 12305675.6
(22) Date of filing: 14.06.2012
(51) Int. Cl.: G06F 17/30, H04L 12/24, H02J 3/38

(54) **Streaming analytics processing node and network topology aware streaming analytics system**

(71) Applicant: Alcatel Lucent, 75007 Paris (FR)
(72) Inventor: Theeten, Bart, 2018 Antwerp (BE)
(74) Representative: Sciaux, Edmond

(57) **Abstract**

An analytics processing node (APN) comprises an analytics processing engine (PED₁) comprising:
- an event stream processing platform (ESPP) for routing and filtering events according to analytics algorithms, and for collaborating with the event stream processing platforms of other nodes,
- a local storage (LS),
- a distributed file system overlay (DFS) or a distributed database, for supporting data-center oriented data warehouse tools, and
- a distributed query engine (DQE) for supporting historical analytics or data-mining type of activities.

A back office data centre (BODC') comprises a complex event processing engine (CEPE'), at least one processing units (PU'), a data base (DB') for storing received analytics data, and an analytics front-end (AFE) comprising:
- a software module for discovering the network topology of a hierarchical telecommunications network;
- a software module for accepting analytics algorithms operating on event data and expressed for example in a language similar to CQL (Continuous Query Language);
- a software module for transforming these algorithms into one or more sub-algorithms, each sub-algorithm implementing a part of the overall analytics algorithm and operating on a subset of the event data; and
- a software module for deploying these sub-algorithms as close as possible to the source of events they operate on, based on the available network topology information.

## Description

### BACKGROUND OF THE INVENTION

### Field of the invention

The present invention generally relates to a streaming analytics processing node for a telecommunication network and a topology aware streaming analytics system comprising such processing nodes.

### Description of the prior art

Collecting real-time analytics is becoming very important for telecommunication and web industry. Businesses are counting on real-time business intelligence data to be able to deduce actionable insights as events are happening. This is done for many reasons, like detecting failure situations, monitoring quality of experience, avoiding churn, being the first in the market, etc.

For this purpose, lots of statistic information is required. The more information one can gather, the better the insights can be. This implies that a telecommunication network must be able to process and store the information being gathered. The classical way to deal with this issue is to store and process all information in large datacenters (i.e. centralized cloud infrastructures) and just adding more horsepower and storage servers to keep up with the demand. But one thing is overlooked: the bandwidth required for getting all that data into the datacenter. We are talking about terabytes per second of sustained bandwidth requirements today and maybe petabytes per second of bandwidth requirements tomorrow. In fact, current systems are designed in such a way as to avoid bandwidth problems, and are therefore making decisions to limit the amount of information being used for the analytics process, leading to poorer insights.

Thus, there is a need to provide a better technical solution for streaming analytics in a telecommunication network.

This can be solved by applying the node and the system according to the invention.

### SUMMARY OF THE INVENTION

A first object of the invention is a streaming analytics node **characterized in that** it comprises an analytics processing engine comprising:
- an event stream processing platform for routing and filtering events according to analytics algorithms, and for collaborating with the event stream processing platforms of other nodes;
- a local storage;
- a distributed file system overlay or a distributed database, for supporting data-center oriented data warehouse tools;
- and a distributed query engine for supporting historical analytics or data-mining types of activities.

A second object of the invention is a back office data centre comprising a complex event processing engine, at least one processing units, a data base for storing received analytics data, and an analytics front-end comprising:
- a software module for discovering the network topology of a hierarchical telecommunications network;
- a software module for accepting analytics algorithms operating on event data;
- a software module for transforming these algorithms into one or more sub-algorithms, each sub-algorithm implementing a part of the overall analytics algorithm and operating on a subset of the event data; and
- a software module for deploying these sub-algorithms as close as possible to the source of events they operate on, based on the available network topology information.

Another object of the invention is a streaming analytics system comprising a plurality of such analytics processing nodes.

Thanks to the discovery of network topology information, the automated deployment of sub-algorithms constituting an overall analytics algorithm, the event stream processing platform and to the distributed query engine, each streaming analytics node collaborates with other streaming analytics nodes. This collaboration reduces the bandwidth required by a streaming analytics system because it adds network topology awareness to the streaming analytics system, so that raw events can be processed and stored close to the event sources and only summary events, i.e. pre-aggregated/pre-correlated events, are sent on to the analytics core deployed in a backend datacenter, hence reducing the core network bandwidth consumption considerably.

Other features and advantages of the present invention will become more apparent from the following detailed description of embodiments of the present invention, when taken in conjunction with the accompanying drawings.

### BRIEF DESCRIPTION OF THE DRAWINGS

In order to illustrate in detail features and advantages of embodiments of the present invention, the following description will be with reference to the accompanying drawings. If possible, like or similar reference numerals designate the same or similar components throughout the figures thereof and description, in which:
- Figure 1 is a block diagram showing an exemplary network comprising a classical streaming analytics system.
- Figure 2 is a block diagram showing an exemplary network comprising a streaming analytics system according to the invention.
- Figure 3 schematically represents an exemplary embodiment of the analytics front-end of the back office data centre represented on figure 2.
- Figure 4 schematically represents an exemplary embodiment of an analytics processing node according to the invention, this embodiment being used in the streaming analytics system represented on figure 2.

### DETAILED DESCRIPTION OF THE PREFERRED EMBODIMENTS

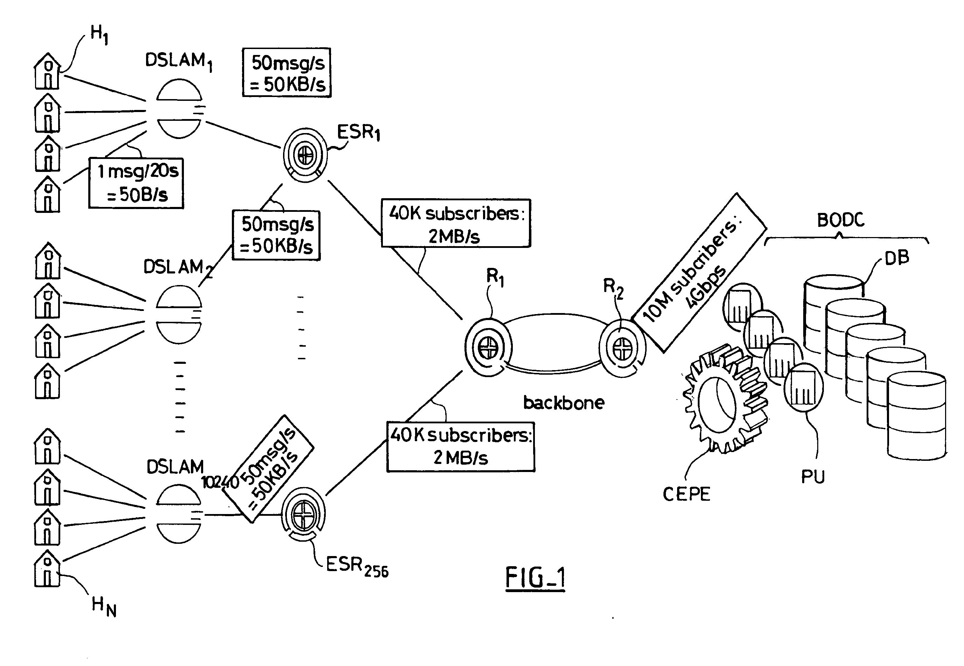

**Figure 1** is a block diagram showing an exemplary network comprising a classical streaming analytics system. This examplary network comprises wired end-user devices in homes H1, ..., H_{N.} For instance, N= 10 * 2²⁰ (about ten million end users). In this example, the end user devices are used for receiving video programs. Each end user device generates analytics events, and a centralized event processing system BODC is used for calculating the quality of experience of video consumers in this large network.
Each end user device has an embedded engine that sends video quality information at regular time intervals. Each end user device generates analytics events, each event comprising 1 Kilobyte in average. Such information may include the current bit rate being received, the amount of re-bufferings that have occurred during the video play-out session, the identification of the content delivery network from where the video is being streamed, etc. All of this data is used to calculate aggregated quality reports, one report every fifteen minutes in each end user device.
These end-user devices are connected to the access domain by digital subscriber line access multiplexers DSLAM₁, DSLAM₂, ... , DSLAM₁₀₂₄₀ (each terminating about 2¹⁰ end-user devices) that aggregate the traffic and send it on to 256 edge service routers ESR₁, ... , ESR₂₅₆.
These edge service routers ESR₁, ... , ESR₂₅₆then aggregate traffic, and send it on to a router R1 of a backbone.
The router R1 aggregates the traffic it receives, and then it sends it to a router R2 of the backbone.
The router R2 aggregates the traffic it receives and then sends it to the network core where the head-end of the streaming analytics system, a back office data centre BODC, is installed.
The back office data centre BODC comprises: a complex event processing engine CEPE, a plurality of processing units PU, and a data base DB for storing the received analytics data. The complex event processing engine CEPE processes all the events sent by the devices of the end users in homes H1, ... , H_{N}.

In this classical streaming analytics system, all analytics data is sent to the back office data centre BODC for processing and storage. In this example, the system needs to support ten million concurrent video sessions, hence leading to 500,000 events per second. We assume each event is represented by about 1 Kilobyte of data. The figure 1 shows the bandwidth requirements at the various aggregation points:
- Each end user device generates one message every 20 seconds, i. e. an average bandwidth of about 50 bytes per second,
- Every multiplexer DSLAM₁, ... , DSLAM₁₀₂₄ therfore forwards about 50 Kilobytes per second (1024 end-user devices per DSLAM).
- Every edge service router ESR₁, ... , ESR₂₅₆ forwards the messages of 40 x 2¹⁰ subscribers, i. e. about 2 Megabytes per second.
- Finally the back office data centre BODC receives the messages of 10 * 2²⁰ subscribers, i. e. 4 Gigabits per second. So a 4Gb/s sustained bandwidth is required at the network core.
The complex event processing engine CEPE needs to process all the events and must select those events that are applicable to the various algorithms or rules inserted in the streaming analytics system. So there is considerable overhead consuming network resources.

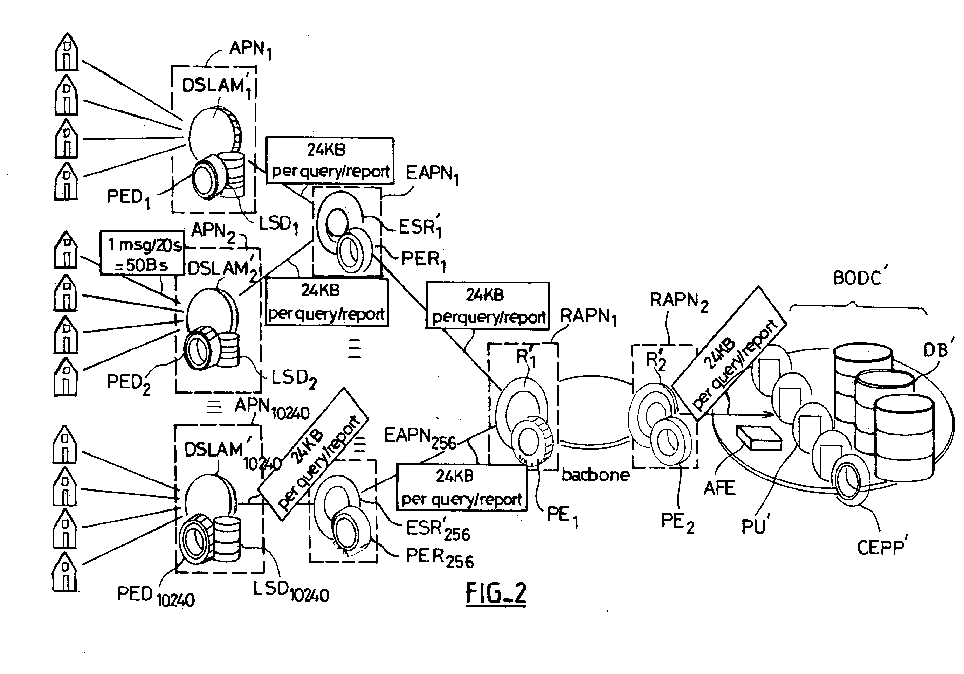

**Figure 2** is a block diagram showing an exemplary network comprising a topology aware streaming analytics system according to the invention. This network comprises wired end-user devices in homes H'₁, ... , H'_{N.} For instance, N= 10 * 2²⁰ (about ten million end users). As in the network previously described, each end user device generates analytics events, each event comprising 1 Kilobyte on average.

Each digital subscriber line access multiplexers DSLAM'₁, DSLAM'₂,... , DSLAM'₁₀₂₄₀ classically has a processing unit, or a supplementary processing unit is added, and is running analytics (sub-)algorithms for constituting an analytics processing engine device (respectively PED₁,..., PED₁₀₂₄₀) and a local storage (respectively LSD1, ... , LSD₁₀₂₄₀) in order to turn this node into an analytics processing node (respectively APN₁, ..., APN₁₀₂₄₀).
Each edge service router ESR'₁,..., ESR'₂₅₆ classically has a processing unit, or a supplementary processing unit is added, and is running analytics (sub-)algorithms for constituting an analytics processing engine device (respectively PER₁,..., PER₂₅₆) in order to turn this node into an analytics processing node (respectively EAPN₁, ... , EAPN₂₅₆).
Each backbone routers R1', R2' classically has a processing unit, or a supplementary processing unit is added, and is running analytics algorithms for constituting an analytics processing engine device (respectively PE₁, PE₂) in order to turn this node into an analytics processing node (respectively RAPN₁, RAPN₂).

The end-user devices are connected to the access domain by the analytics processing nodes APN₁, ... , APN₁₀₂₄₀.
The analytics processing nodes APN₁, ... , APN₁₀₂₄₀ run analytics (sub-)algorithms that operate on events received and/or generated by devices upstream of the DSLAM', such as the end-user devices (H'1, ..., H' _{N}). A typical algorithm would aggregate multiple events into a smaller number of other events (e.g. aggregating counters) which are then sent downstream to one of the 256 analytics processing nodes EAPN₁, ... , EAPN₂₅₆.

The analytics processing nodes EAPN₁, ... EAPN₂₅₆ then run analytics (sub-) algorithms that operate on events received and/or generated by DSLAM's or other devices upstream. A typical algorithm would further aggregate these (possibly pre-aggregated) events into yet a smaller number of other events which are then again sent downstream to the analytics processing node RAPN₁ in the backbone. The analytics processing node RAPN₁ aggregates the traffic it receives, and then it sends it to the analytics processing node RAPN₂ in the backbone. The analytics processing node RAPN₂ aggregates the traffic it receives and then sends it to the network core where the head-end of the streaming analytics system, a back office data center BODC', is installed.

The back office data centre BODC' comprises: a complex event processing engine CEPE', a plurality of processing units PU', a data base DB' for storing the received analytics data, and an analytics front-end AFE.

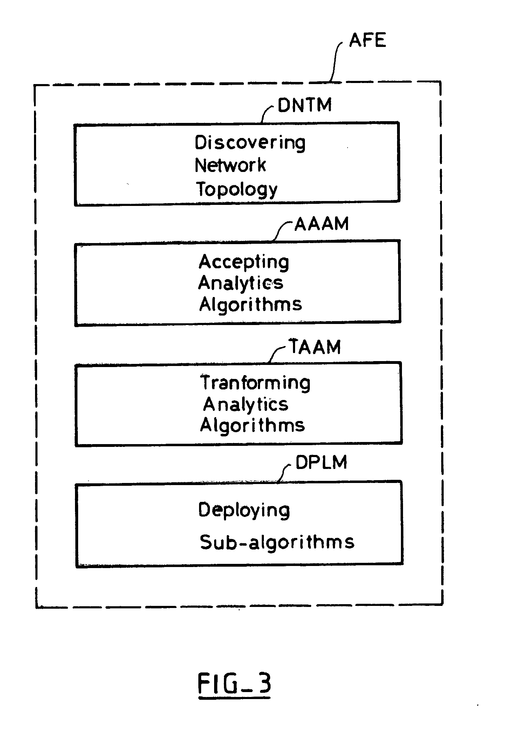

**Figure 3** schematically represents an exemplary embodiment of the analytics front-end AFE of the back office data centre BODC', comprising:
- A software module DNTM for discovering the network topology of a hierarchical telecommunications network.
- A software module AAAM for accepting analytics algorithms operating on event data and expressed for example in a language similar to CQL (Continuous Query Language).
- A software module TSAM for transforming these algorithms into one or more sub-algorithms, each sub-algorithm implementing a part of the overall analytics algorithm and operating on a subset of the event data
- A software module DPLM for deploying these sub-algorithms as close as possible to the source of events they operate on, based on the available network topology information

The end-user events are aggregated by the processing engines PED₁, ..., PED₁₀₂₄₀, and a summary report (i.e. a pre-aggregated counter report) is elaborated. This summary is sent to one of the processing engines PER₁,..., PER₂₅₆ every 15 minutes, when the edge service router (respectively ESR'₁,..., ESR'₂₅₆) sends a query to the processing engines (respectively PED₁,..., PED₁₀₂₄₀) of the nodes APN₁, ..., APN₁₀₂₄₀ for requesting their respective summary reports. Each summary report covers a period of 1 month with one data point (i.e. a counter) per 15 minutes interval. For instance, each data point comprises 2 x 32 bits (time slot + value). All the raw events are stored in the local storages LSD1, ... , LSD₁₀₂₄₀ of the nodes APN₁, ..., APN_{10240.}
Each edge service routers ESR'₁, ..., or ESR'₂₅₆ aggregates the summary reports it has received during a given time interval and then it sends a summary report to the node RAPN₁ of the backbone.

The processing engine PE₁ aggregates the summary reports it has received and then it sends a summary report to the node RAPN₂ of the backbone.
The processing engine PE₂ aggregates the summary reports it has received during a given time interval and then it sends an overall summary report to the back office data center BODC'.
This amounts to an overall summary report size of about 24 Kilobytes (2880 x data points = 4/h x 24h x 30d x 2 x 32 bits/data point).

The analytics algorithm is specific for the analytics task at hand. It is split into its constituting parts and the deployment of those parts is distributed in the most bandwidth efficient way, i.e. by deploying those parts of the algorithm in processing engines as close as possible to the sources of the analytics events (i.e. as high as possible in the tree); and/or, if correlation is required, as close as possible to the intersection point of all streams involved in the correlation process.
Each node by itself doesn't need to be network-topology-aware, but the analytics system running in the back office data centre BODC' is. This analytics system receives a "continuous query" algorithm implementing an analytics function. This system uses the network-topology awareness to split this algorithm into smaller sub-algorithms and knows how to deploy those various parts of the algorithm on the various nodes in the network topology.
A continuous query is specified e.g. in CQL (Continuous Query Language), or equivalent language like EQL (Esper Query Language). This latter is supported by an open source tool called Esper (from Espertech). The tools supporting CQL/EQL are called Complex Event Processing (CEP) tools. CQL/EQL is similar to SQL but the difference is that in SQL you run the query on a fixed data set while in CQL/EQL the query is executed continuously while new data is coming in; so in a streaming fashion.

Raw events are also stored at or near the processing engines of the nodes EAPN₁, ..., EAPN₂₅₆so that no bandwidth is consumed further down the network (i.e. towards the network core) for these raw events. Only summary reports (e.g. pre-aggregated, pre-correlated events) are sent on to the network core where the head-end of the streaming analytics system, the back office data centres BODC', is installed.
Having the raw events locally stored at various processing nodes still enables to run historical analytics or data-mining types of activities on that information. The proposed system uses a classical distributed file system (or database), and/or distributed query routing and execution, to achieve the same goal as if the data would be available from a centralized data centre.

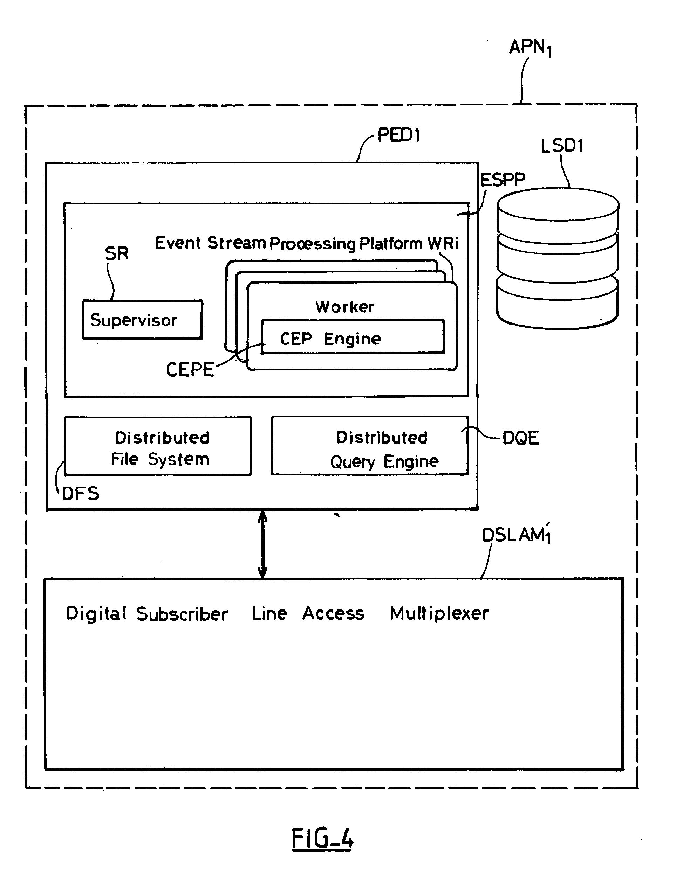

**Figure 4** schematically represents an exemplary embodiment APN1 of an analytics processing node according to the invention, this embodiment being used in the exemplary streaming analytics system represented on figure 2. As mentioned above, this node comprise the digital subscriber line access multiplexer DSLAM'₁ associated with the analytics processing engines PED₁ and the local storages LSD₁. Each of the other nodes, such as the nodes EAPN₁, RAPN₁, RAPN₂, comprises a similar analytics processing engine. They only differ by the absence of a local storage (However in other embodiments, they could also comprise local storages).

The analytics processing node doesn't actually need to comprise the digital subscriber line access multiplexer but should preferably be co-located or somehow attached to the digital subscriber line access multiplexer. The fact that it is co-located at the digital subscriber line access multiplexer in the figures is just an example and might not be the most practical solution.
Other practical deployments may have analytics processing nodes only at the edge layer and down.

The analytics processing engines PED₁ comprises:
- An event stream processing platform ESPP (such as the platform marketed under the name Storm) acting as an event routing / filtering layer, and collaborating with the event stream processing platforms of the other nodes of the system. This platform comprises a supervisor process SR and a plurality of worker processes WRᵢ, to execute analytics algorithms.
- A local storage LSD₁, such as a database system or just a flat-file storage system.
- A distributed file system overlay DFS (or a distributed database, such as the distributed database marketed under the name Apache Cassandra or Hbase) to support classical data-center oriented data warehouse tools.
- A distributed query engine DQE (such as the distributed query engine marketed under the name Hadoop Map Reduce) to support historical analytics or data-mining type of activities.

Stream processing is a known computer programming paradigm that allows some applications to more easily exploit a limited form of parallel processing. Such applications can use multiple computational units without explicitly managing allocation, synchronization, or communication among those units.

Each worker process WRᵢ comprises a complex event processing engine CEPE to execute the analytics algorithms. All workers WRᵢ are supervised by the supervisor process SR in charge of assigning tasks across the various workers of the node APN₁ and monitoring their state. Complex event processing consists of processing many events happening across all the layers of an organization, identifying the most meaningful events within the event cloud, analyzing their impact, and taking subsequent action in real time.
Complex event processing refers to process states, the changes of state exceeding a defined threshold of level, time, or value increment or just of a count as the event. It requires the respective event monitoring, event reporting, event recording and event filtering. An event may be observed as a change of state with any physical or logical or otherwise discriminated condition. Each event comprises an attached time stamp defining the order of occurrence and a topology mark defining the location of occurrence.
Complex event processing relies on a number of classical techniques including:
- event-pattern detection,
- event abstraction,
- modeling event hierarchies,
- detecting relationships (such as causality, membership or timing) between events,
- abstracting event-driven processes.

Map Reduce is a known programming model and an associated implementation for processing and generating large data sets. Users specify a map function that processes a key/value pair to generate a set of intermediate key/value pairs, and a reduce function that merges all intermediate values associated with the same intermediate key. Programs written in this functional style are automatically parallelized and executed on a large cluster of commodity machines. The run-time system takes care of the details of partitioning the input data, scheduling the program's execution across a set of machines, handling machine failures, and managing the required inter-machine communication. A typical Map Reduce computation processes many terabytes of data on thousands of machines.

The supervisor is in charge of coordinating which tasks run on its own node. There is another node, the "Nimbus", not represented on the figures, running in the back end, and that coordinates all supervisors and distributes "jobs" to them in a classical way. This "Nimbus" can be based on a framework such as "Storm".

The network topology is automatically discovered by classical means e.g. via Application-Layer Traffic Optimization (ALTO) servers. The goal of Application-Layer Traffic Optimization is to provide guidance to applications, which have to select one or several hosts from a set of candidates that are able to provide a desired resource. Entities seeking guidance discover and possibly select an ALTO server to ask. If the topology changes (e.g. nodes are added or removed) this is notified and taken into account by the system.

A network topology aware streaming analytics system comprising analytics processing nodes according to the invention has much better performance in terms of amount of events processed/second because of the sheer amount of processing elements that can handle event streams in parallel and because the processing elements deployed throughout the network will be more specialized and will get much fewer events that are not relevant to the processing element.

In the case of a known centralized system, the complex event processing engine needs to process all events and must select those events that are applicable to the various algorithms or rules inserted in the system. In the system according to the invention, the processing elements are smaller and only those events of their interest are routed to them, so there is a much less overhead consuming network resources.

The analytics processing node according to the invention can be used for other applications. For instance, it can be used to process meter readouts in a smart-grid deployment with distributed power generation (e.g. solar installations on end-user rooftops). Power generation readouts are gathered locally (i.e. at the street cabinet), aggregated for this local area and sent on to the datacenter. Again, much less bandwidth is consumed in transmitting summary reports, whilst maintaining all raw event data at the various aggregation points for future historical analysis purposes.

## Claims

1. An analytics processing node (APN) **characterized in** it comprises an analytics processing engines (PED₁) comprising:
- an event stream processing platform (ESPP) for routing and filtering events according to analytics algorithms, and for collaborating with the event stream processing platforms of other nodes;
- a local storage (LS);
- a distributed file system overlay (DFS) or a distributed database, for supporting data-center oriented data warehouse tools;
- and a distributed query engine (DQE) for supporting historical analytics or data-mining type of activities.

2. A back office data centre (BODC') comprising a complex event processing engine (CEPE'), at least one processing unit (PU'), a data base (DB') for storing received analytics data, and an analytics front-end (AFE) comprising:
- a software module for discovering the network topology of a hierarchical telecommunications network;
- a software module for accepting analytics algorithms operating on event data;
- a software module for transforming these algorithms into one or more sub-algorithms, each sub-algorithm implementing a part of the overall analytics algorithm and operating on a subset of the event data;
- and a software module for deploying these sub-algorithms as close as possible to the source of events they operate on, based on the available network topology information.

3. A streaming analytics system comprising a plurality of analytics processing nodes according to claim 1, and a back office data centre (BODC') according to claim 2.

## Amended claims

### Amended claims in accordance with Rule 137(2) EPC.

**.** streaming analytics system comprising:
- a plurality of analytics processing nodes (APN; EAPN₁), each comprising an analytics processing engines (PED₁; PER₁) comprising:
- - an event stream processing platform (ESPP) for aggregating, or further aggregating, events according to analytics algorithms; each event being observed as a change of state with any physical or logical or otherwise discriminated condition; and each event comprising an attached time stamp defining the order of occurrence and a topology mark defining the location of occurrence;
- - a local storage (LS);
- - a distributed file system overlay (DFS) or a distributed database, for supporting data-center oriented data warehouse tools;
- - and a distributed query engine (DQE) for supporting historical analytics or data-mining type of activities;
- and a back office data centre (BODC') comprising a complex event processing engine (CEPE'), at least one processing unit (PU'), and a data base (DB') for storing received analytics data;
**characterized in that** the back office data centre (BODC') further comprises an analytics front-end (AFE) comprising:
- - a software module for discovering the network topology of a hierarchical telecommunications network;
- - a software module for accepting analytics algorithms operating on event data;
- - a software module for transforming these algorithms into one or more sub-algorithms, each sub-algorithm implementing a part of an overall analytics algorithm and operating on a subset of the event data;
- - and a software module for deploying this sub-algorithm or these sub-algorithms in the analytics processing engines (PED₁; PER₁) of said plurality of analytics processing nodes (APN; EAPN₁), as close as possible to the source of events they operate on, and/or, if correlation is required, as close as possible to the intersection point of all streams involved in the correlation process, based on the available network topology information.
